# EUROPEAN PATENT APPLICATION

(11) **EP 2 034 742 A2**
(43) Date of publication of application: **11.03.2009**
(21) Application number: 08252152.7
(22) Date of filing: 20.06.2008
(51) Int. Cl.: H04N 7/34

(54) **Video coding method and device**

(30) Priority: 25.07.2007 JP 2007193524; 29.10.2007 JP 2007279783
(71) Applicant: Hitachi Ltd., Chiyoda-ku Tokyo 100-8280 (JP)
(72) Inventor: Takahashi, Masashi c/o Hitachi, Ltd.,, Chiyoda-ku, Tokyo 100-8220 (JP); Murakami, Tomokazu c/o Hitachi, Ltd., Intellectual, Tokyo 100-8220 (JP)
(74) Representative: Hackney, Nigel John

(57) **Abstract**

For coding with intra-prediction according to the H.264/AVC standard, reconstructed pixels from adjacent blocks are used to perform prediction of a target block, so that the prediction needs to be performed by referencing spatially-separate pixels. As such, the prediction accuracy is not always sufficient.
An intra-prediction technique is proposed, whereby for each pixel in the block an adjacent pixel is always used as reference. During coding, the difference value (prediction residue) between the adjacent pixels is calculated in a certain direction (predicting direction) and encoded with the predicting direction. During coding of a pixel, adjacent pixels may have not been encoded yet. In that case, the difference value between the original values of the adjacent pixels is encoded. On the other hand, in the decoder, processing to add a value produced by decoding the previous pixel value and the prediction residue is repeated in a predicting direction to obtain a decoded image. This can perform highly-efficient coding due to the strong correlation between adjacent pixels.

## Description

The present invention relates to a moving image coding technique to encode and decode a moving image.

Coding schemes such as MPEG (Moving Picture Experts Group) schemes have been formulated as approaches to recording and transmission of high-capacity moving image information as digital data. As a result, such schemes are international standard coding schemes as the MPEG-1 specifications, the MPEG-2 specifications, the MPEG-4 specifications, the H.264/AVC (Advanced Video Coding) specifications and the like. These schemes are employed as coding schemes such as in digital satellite broadcast, DVDs, mobile phones or digital cameras, hence are recently applied in broader ranges and are more common.

According to the specifications, by using image information on which coding processing is completed to predict an image to be encoded on each block and by encoding the prediction residue from the original image, the amount of coding is reduced by eliminating the redundancy of the moving image. Particularly in the H.264/AVC, an intra-screen predictive coding scheme is employed to use pixels around a block to be encoded, realizing dramatic improvement of a compression rate.

However, the intra prediction according to the H.264/AVC can only reference information of pixels adjacent to a target block, hence the prediction accuracy is not so sufficient. Therefore, an intra-screen coding technique has been desired to improve the accuracy of the intra prediction and a compression rate.

In light of the above background, many techniques have been proposed to improve the accuracy of intra prediction by increasing kinds of pixels available for the intra prediction.

For example, in Japanese Patent Laid-Open Publication No. 2006-352181, an entire image can be reversed and then encoded, so that pixel kinds are increased that can be used for the intra prediction by changing the order of coding processing.

In Japanese Patent Laid-Open Publication No. 2007-43651, blocks used to predict a target block are searched for from an encoded region on an identical intra-screen, so that prediction can be performed by referencing separate blocks.

Japanese Patent Laid-Open Publication No. 2007-74725 discloses an intra-predictive coding method including the stages of: dividing an input block into at least two or more regions; performing the intra-predictive coding by using pixels of blocks around a pixel in a first region of the divided regions; restoring the pixels in the first region subjected to intra-predictive coding; and predicting pixels in a second region in at least one or more prediction modes of a plurality of prediction modes by using the reconstructed pixels in the first region.

Japanese Patent Laid-Open Publication No. 2007-74726 discloses an intra-predictive video coding method of: dividing an input block into at least two or more regions; performing intra-prediction by using pixels of blocks around pixels in a first region of the divided regions; deciding spatial characteristics of pixels in the first region positioning around a pre-determined pixel in a second region of the divided regions; deciding a reference pixel of the first region to predict the pixels in the second region based on the decided spatial characteristics; and performing prediction of the pixels in the second region based on the decided reference pixel of the first region.

Meanwhile, G. Sullivan and T. Wiegand: "Rate-Distortion Optimization for Video Compression", IEEE Signal Processing Magazine, vol. 15, no. 6, pp. 74-90, 1998. describes an RD-Optimization scheme for deciding the optimal coding mode from the relation between image quality distortion and the amount of coding.

However, any of existing intra-screen predictive coding techniques including the above documents uses a reconstructed pixel for prediction. As such, if intra-screen predictive coding is performed for each block, the prediction needs to reference a spatially-separate pixel. In that case, there is a problem in that the distance between a pixel to be predicted and the referenced pixel is great so that the correlation between the pixels decreases and the prediction accuracy decreases.

In the intra-screen predictive coding according to the H.264/AVC, adjacent encoded pixels are used to perform prediction of a target block, so that the prediction needs to be performed by referencing spatially-separate pixels. As such, the prediction accuracy is not always sufficient.

Therefore, the present invention aims to provide a technique to improve the prediction accuracy preferably by using a coding mode to perform intra-screen predictive coding and decoding to perform prediction by always referencing adjacent pixels. The present invention aims to increase the efficiency of the intra-screen predictive coding preferably by using a coding mode to perform the intra-screen predictive coding and decoding to perform the prediction preferably by always referencing adjacent pixels with high correlation between the pixels.

In the coding mode according to the present invention, adjacent pixels are preferably always used to perform the intra-screen predictive coding and decoding. In the coding, the difference value (prediction residue) between the adjacent pixels is preferably calculated in a certain direction (predicting direction) and encoded with the predicting direction. In the coding of each block, adjacent pixels may have not been encoded yet. In that case, the difference value between adjacent pixels in an original image is preferably encoded. On the other hand, in the decoding, processing to add a value produced by decoding the previous pixel value and the prediction residue is preferably repeated in a predicting direction to obtain a decoded image. This can perform highly-efficient coding processing using strong correlation between adjacent pixels.

According to the present invention, a moving image coding technique and decoding technique can be provided to provide a high image quality of video by less amount of coding. The present invention is directed to a next-generation image coding standard. For example, the predictive coding technique according to this technique can be used in combination with the prior arts, so that a high compression rate can be realized. For example, intra-screen predictive coding techniques according to this technique and the H.264/AVC are appropriately used for each block so that coding can be performed in a suitable way for a feature of an image. Additionally, the present invention is highly effective particularly to coding at a high bit rate, particularly to lossless coding.

### BRIEF DESCRIPTION OF THE DRAWINGS

These and other features, objects and advantages of the present invention will become more apparent from the following description when taken in conjunction with the accompanying drawings wherein:
FIG. 1 is a block diagram of an image coding device used in an embodiment;
FIG. 2 is a block diagram of an image decoding device used in this embodiment;
FIG. 3 is conceptual illustration of intra-screen predictive coding processing used in the H.264/AVC;
FIG. 4 is conceptual illustration of intra-screen predictive coding processing used in this embodiment;
FIG. 5 is a flow diagram for the image coding device used in this embodiment;
FIG. 6 is a detailed flow diagram of the image coding device used in this embodiment;
FIG. 7 is a flow diagram for the image decoding device used in this embodiment;
FIG. 8 is a detailed flow diagram of the image decoding device used in this embodiment;
FIG. 9 is a configuration example of an encoded stream used in this embodiment;
FIG. 10 is a configuration example of an encoded stream used in this embodiment;
FIG. 11 is conceptual illustration of smoothing processing used in this embodiment;
FIG. 12 is a detailed flow diagram of the image coding device used in this embodiment; and
FIG. 13 is a detailed flow diagram of the image decoding device used in this embodiment.

### DETAILED DESCRIPTION OF THE PREFERRED EMBODIMENTS

While we have shown and described several embodiments in accordance with our invention, it should be understood that disclosed embodiments are susceptible of changes and modifications without departing from the scope of the invention. Therefore, we do not intend to be bound by the details shown and described herein but intend to cover all such changes and modifications a fall within the ambit of the appended claims.

The following will describe an embodiment of the present invention with reference to the drawings.

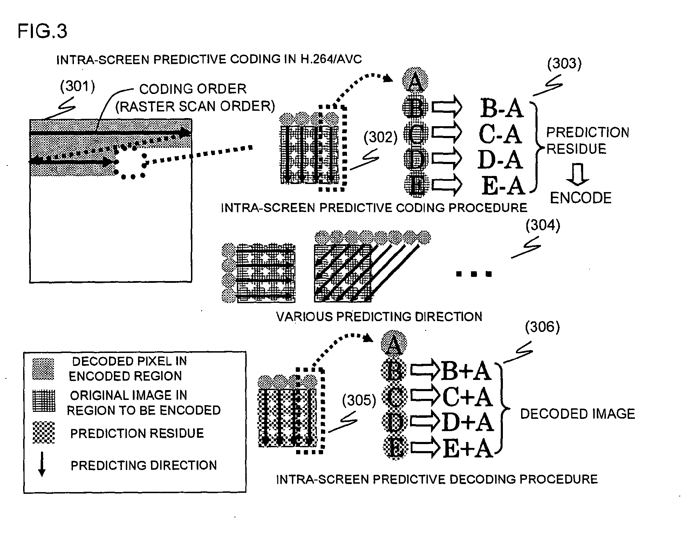

FIG. 3 conceptually shows the operation of intra-screen predictive coding processing according to the H.264/AVC as a prior art. According to the H.264/AVC, the coding is executed on images to be encoded in the raster scanning order (301), and the predictive coding is performed using a decoded image in an encoded image region.

As such, in an operation example (302) of the intra-screen predictive coding processing, all pixels on an identical line with slope of a predicting direction vector are predicted from an identical pixel. For example as shown in (303), the predictive coding is performed on all of pixels B, C, D and E in a block to be encoded by referencing an identical pixel A, and the difference from a value produced by decoding the pixel A (prediction residue) is calculated. Additionally, the optimal one can be selected from several kinds of predicting direction candidates such as lengthwise, crosswise, oblique and the like for each block (304), and values of the prediction residue and the predicting direction are encoded.

On the other hand, the decoding processing may take a procedure reverse to the above processing using a referenced pixel and the prediction residue being decoded. The processing adds a non-reference pixel and the prediction residue in the predicting direction to obtain a decoded image (305). For example in (306), all the pixels B, C, D and E on a block to be decoded are decoded using the sum of the decoded referenced pixel A and the prediction residue. As described in the above, in the intra-screen predictive coding processing according to the H.264/AVC, it is necessary to reference spatially-separate pixels since a referenced pixel is limited to an encoded pixel (for example, the predictive coding is performed on the pixel E by referencing the separate pixel A). As such, the processing has a problem in that the correlation between separate pixels decreases so that the prediction accuracy is not sufficient.

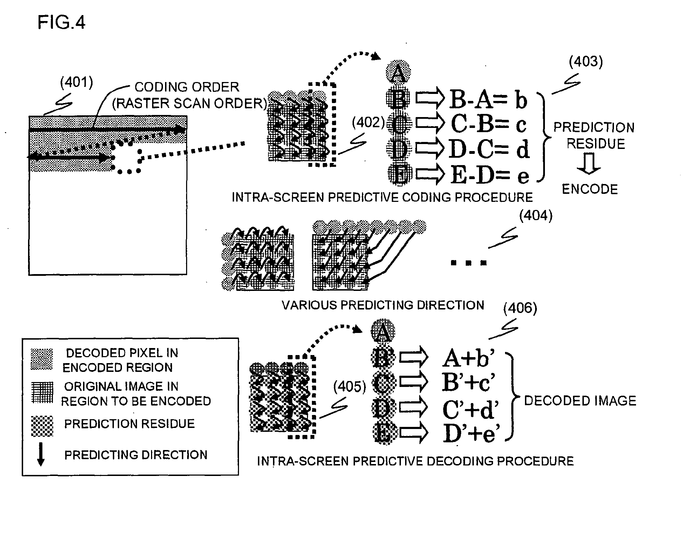

FIG. 4 is a diagram conceptually showing the operation of intra-screen predictive coding processing according to this embodiment. Also in this case, the coding is performed on an image to be encoded in the raster scanning order (401). However, to solve the above problem, prediction can be performed by referencing spatially near pixels even if the coding processing has not been completed in this embodiment. For example in (402), the prediction is always performed in the lengthwise direction by referencing adjacent pixels.

In the above case, decoded pixel information cannot be used to reference a region not being encoded as in the prior art. As such, the value of an original image positioning at the same coordinates is used to perform the prediction. For example in (403), the prediction is performed on each of the pixels C, D and E using the pixels B, C and D not being encoded, and the difference between pixels positioning above and below to each other in the original image is calculated for the pixels not being encoded (B-A=b, C-B=c, D-C=d, E-D=e). Further, various predicting directions can be defined in this embodiment (404) and values of the prediction residue and the predicting direction are encoded.

Only a decoded image is used for the prediction processing in the decoding differently from the coding, and processing is repeated to add the decoded image positioning at the previous coordinates and the prediction residue in the predicting direction so that the decoded image can be obtained (405). For example in (406), for the respective pixels B, C, D and E, decoded images can be obtained by adding decoded images (A', B', C' and D') of the pixels A, B, C and D and prediction residues (b', c', d' and e').

In this embodiment, if quantization processing is conducted on the prediction residue in the coding, quantization errors might be accumulated. As such, with this embodiment, though the prediction accuracy improves and the prediction residue decreases, quantization errors might increase. In that case, the predictive coding using the prior art might improve the coding efficiency.

Consequently, the predictive coding technique according to this embodiment is used in combination with the prior arts so that a high compression rate can be realized depending on a feature of an image. For example, this technology and the prior arts are used appropriately for predictive coding of each block, enabling coding suitable for a feature of an image. As the prior arts, intra-screen predictive coding according to the H.264/AVC shown in FIG. 3, or inter-screen predictive coding to use a different image (decoded image) from an image to be encoded is effectively used, for example.

### [Embodiment 1]

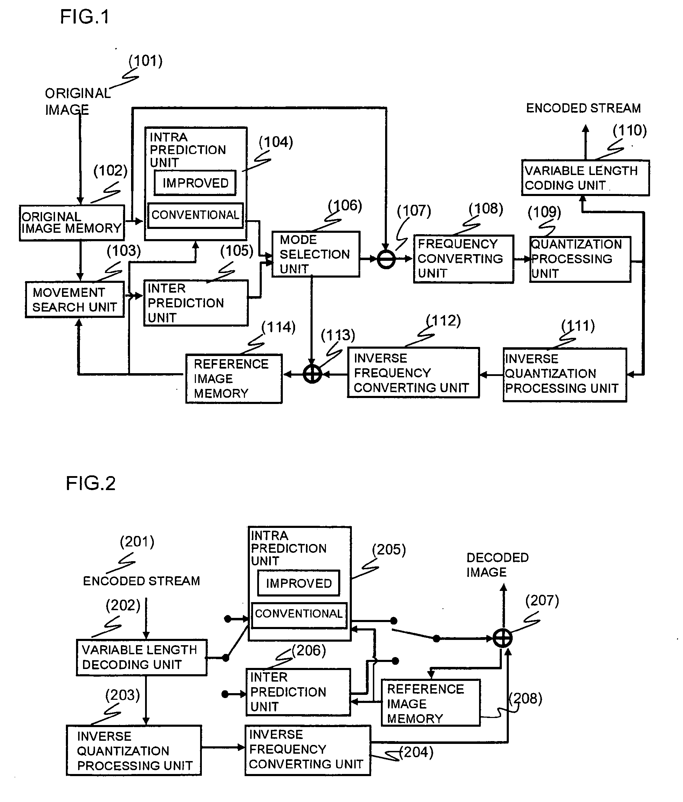

FIG. 1 shows one embodiment of a moving image coding device according to this embodiment. The moving image coding device includes an input image memory (102) which retains inputted original images (101), a movement search unit (103) which detects the movement of each block of an input image split into small regions, an intra prediction unit (104) which performs intra prediction similarly on each block, an inter prediction unit (105) which performs inter prediction based on the amount of the detected movement, a mode selection unit (106) which decides predictive coding means suitable for the feature of the image, a subtraction unit (107) to generate the prediction residue, a frequency converting unit (108) and quantization unit which perform coding on the prediction residue (109), a variable length coding unit (110) to perform coding depending on the probability of symbol occurrence, an inverse quantization processing unit (111) and inverse frequency converting unit (112) which decode the prediction residue that has already been encoded, an addition unit (113) which generates a decoded image using the decoded prediction residue, and a reference image memory (114) which retains the decoded image to use it for the following prediction.

The original image memory (102) retains a single image among the original images (101) as an image to be encoded, splits the image into fine blocks and passes the blocks to the movement search unit (103) and the intra prediction unit (104).

The movement search unit (103) calculates the amount of movement of a relevant block using a decoded image stored in the reference image memory (114) and passes the amount as a motion vector to the inter prediction unit (105).

The intra prediction unit (104) and the inter prediction unit (105) execute the intra prediction processing and the inter prediction processing on several sizes of blocks, respectively. The mode selection unit (106) chooses the optimal prediction decoding means. Subsequently, the subtraction unit (107) generates the prediction residue by the optimal predictive coding means and passes the difference to the frequency converting unit (108).

The intra prediction unit (104) includes improved intra-screen predictive coding means which performs the predictive coding processing on a pixel to be encoded by always referencing its adjacent pixels, and conventional intra-screen predictive coding means according to the H.264/AVC, for example.

The frequency converting unit (108) and the quantization processing unit (109) perform frequency conversion such as DCT (Discrete Cosine Transformation), and quantization processing on a sent difference image in a designated size of block, respectively, and pass the result to the variable length coding processing unit (110) and the inverse quantization processing unit (111).

The variable length coding processing unit (110) further performs the variable length coding on prediction residue information represented by a frequency conversion coefficient along with additional information necessary for the predictive decoding such as a predicting direction of the intra-screen predictive coding or a motion vector for the inter-screen predictive coding, for example, based on the probability of symbol occurrence to generate an encoded stream.

The inverse quantization processing unit (111) and the inverse frequency converting unit (112) also conduct the inverse quantization and the inverse frequency conversion such as IDCT (Inverse DCT) on the quantized frequency conversion coefficient, respectively, obtain the prediction residue and send the difference to the addition unit (113). Subsequently, the addition unit (113) generates a decoded image which is stored in the reference image memory (114).

FIG. 2 shows one embodiment of a moving image decoding device according to this embodiment. The moving image decoding device includes a variable length decoding unit (202) which takes an inverse procedure to the variable length coding on an encoded stream (201) generated by the moving image coding device shown in FIG. 1, for example, an inverse quantization processing unit (203) and an inverse frequency converting unit (204) which decode the prediction residue, an intra prediction unit (205) and an inter prediction unit (206) which perform the prediction, an addition unit (207) which obtains a decoded image, and a reference image memory (208) which temporally stores the decoded image.

The intra prediction unit (205) includes intra-screen predictive decoding means which predicts a pixel to be decoded by always referencing its adjacent pixels, and conventional intra-screen predictive coding means according to the H.264/AVC, for example.

The variable length decoding unit (202) decodes the encoded stream (201), and obtains a frequency conversion coefficient component of the prediction residue and additional information necessary for prediction processing such as a predicting direction and a motion vector. The former prediction residue information is sent to the inverse quantization processing unit (203), while the latter additional information is sent to the intra prediction unit (205) or the inter prediction unit (206) depending on prediction means. Subsequently, the inverse quantization processing unit (203) and the inverse frequency converting unit (204) perform the decoding by conducting the inverse quantization and the inverse frequency conversion on the prediction residue information. Meanwhile, the intra prediction unit (205) or the inter prediction unit (206) executes the prediction processing based on the additional information, the addition unit (207) generates a decoded image which is stored in the reference image memory (208).

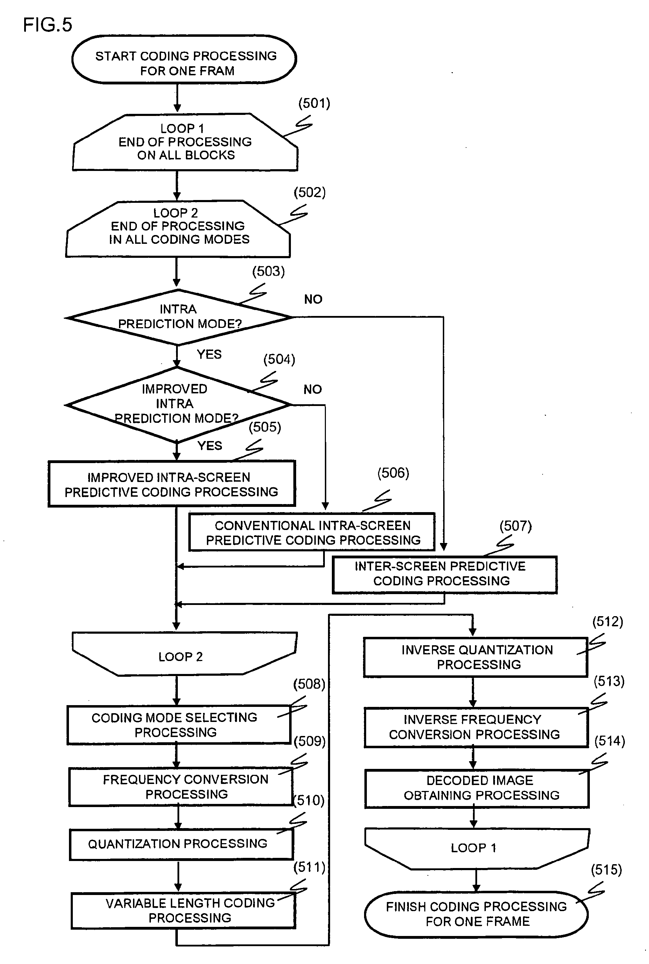

FIG. 5 shows a coding processing procedure on one frame in the embodiment of the moving image coding device shown in FIG. 1. First, the following processing is performed on all blocks in a frame to be encoded (501). That is, the predictive coding processing is performed on a relevant block in all coding modes (combination of prediction methods and block sizes) to calculate the prediction residue, and the mode with the highest coding efficiency is selected. In the prediction processing method, efficient coding can be performed depending on a feature of an image by executing the intra prediction method (hereinafter, "conventional intra-screen predictive coding processing" (506)) or the inter-screen predictive coding processing (507) employed in the H.264/AVC, for example, in addition to a method according to the present invention (hereinafter, "improved intra-screen predictive coding processing" (505)) and choosing the optimal one. Further, to select the mode with the highest coding efficiency among the above large number of coding modes (508), a RD-Optimization scheme of deciding the optimal coding mode depending on the relation between image quality distortion and the amount of coding, for example, can be used for the efficient coding. Details of the RD-Optimization scheme are described in G. Sullivan and T. Wiegand: "Rate-Distortion Optimization for Video Compression", IEEE Signal Processing Magazine, vol. 15, no. 6, pp. 74-90, 1998.

Subsequently, the frequency conversion (509) and the quantization processing (510) are conducted and the variable length coding is further performed on the prediction residue generated in the chosen coding mode to generate an encoded stream (511). Meanwhile, the inverse quantization processing (512) and the inverse frequency conversion processing (513) are conducted on a quantized frequency conversion coefficient to decode the prediction residue, and a decoded image is generated and stored in the reference image memory (514). When the above processing is completed for all the blocks, the coding finishes for one frame of the image (515).

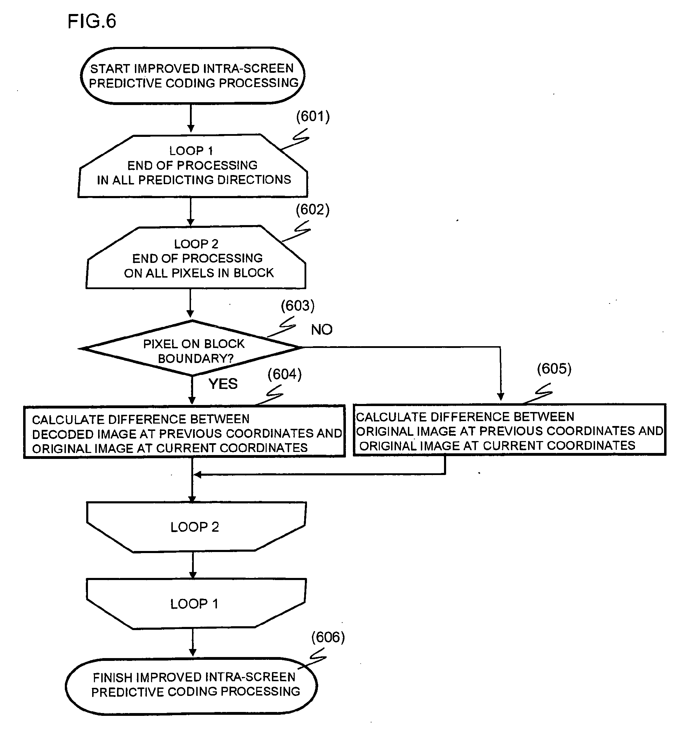

FIG. 6 shows a detailed processing procedure of the above improved intra-screen predictive coding processing (505). Herein, the following processing is performed on all pixels in a block in all previously defined predicting directions such as lengthwise, crosswise or oblique (601) and in the order along the predicting direction (602). That is, if a relevant pixel is on the block boundary (603), the difference between a decoded image at the previous coordinates and the original image at the current coordinates is calculated (604); if the pixel is not on the block boundary, the difference between the original image at the previous coordinates and the original image at the current coordinates is calculated (605). When the above processing is completed in all the predicting directions, the prediction residue in one block can be obtained. Then, the predictive coding processing is finished (606).

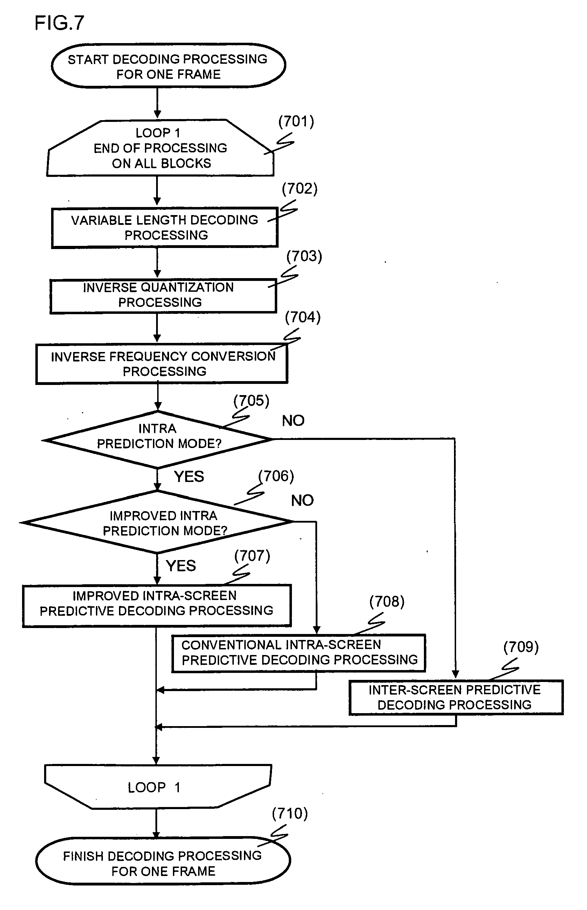

FIG. 7 shows a decoding processing procedure for one frame in the embodiment of the moving image decoding device shown in FIG. 2. First, the following processing is performed on all blocks in one frame (701). That is, the variable length decoding processing is conducted on an input stream (702), the inverse quantization processing (703) and the inverse frequency conversion processing (704) are conducted to decode the prediction residue. Subsequently, depending on what method has performed the predictive coding on a target block, the improved intra-screen predictive decoding processing (707), the conventional intra-screen predictive decoding processing (708) and the inter-screen predictive decoding processing (709) are performed so that a decoded image is obtained and stored in the reference image memory. When the above processing is completed on all the blocks, the decoding finishes for one frame of an image (710).

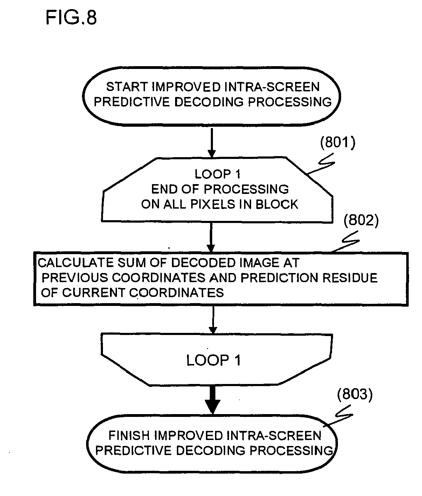

FIG. 8 shows a detailed processing procedure of the above improved intra-screen predictive decoding processing (707). Herein, the following processing is performed on all pixels in a block in the order along a predicting direction (801). That is, the sum of the decoded image at the previous coordinates and the prediction residue of the current coordinates is calculated (802). When the above processing is completed on all the pixels, one block of the decoded image can be obtained. Then, the predictive decoding processing finishes (803).

The improved intra-screen predictive coding processing according to the above embodiment uses a decoded image of encoded pixels to predict a pixel positioning on the block boundary. This prevents a quantization error in the target block from propagating into another block. However, a prediction error may be major in a block boundary part in that case. To make the prediction error minor, the original image at the previous coordinates can be used for the predictive coding of a pixel positioning on the block boundary.

Further, the improved intra-screen predictive coding processing according to this embodiment has different reference pixel values at the coding and the decoding, so that quantization errors tend to accumulate. To reduce the quantization errors in another configuration example of the improved intra-screen predictive coding processing, the pixel value of a reference pixel can be smoothed when the prediction is performed. In this case, the errors are diffused so that the prediction accuracy improves. The effect increases particularly at a low bit rate. The other configuration example will be described below.

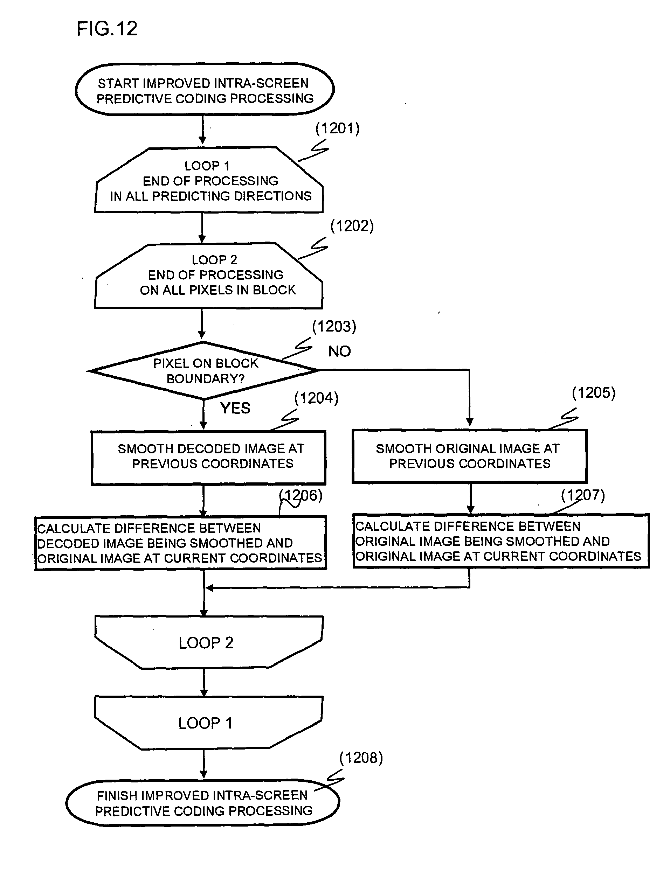

FIG. 12 is a configuration example of using the above smoothing processing in the improved intra-screen predictive coding processing shown in FIG. 6. In the configuration example in FIG. 12, the pixel value of a reference pixel is smoothed. Herein, the following processing is performed on all pixels in a block in all of previously defined predicting directions such as lengthwise, crosswise, oblique (1201), and in the order along a predicting direction (1202). That is, if the relevant pixel is on the block boundary (1203), then a decoded image at the previous coordinates is smoothed (1204), and subsequently, the difference between the decoded image being smoothed and the original image at the current coordinates is calculated (1206). Otherwise, if the pixel is not on the block boundary, then the original image at the previous coordinates is smoothed (1205) and the difference between the original image being smoothed and the original image at the current coordinates is calculated (1207). When the above processing is completed in all the predicting directions, the prediction residue for one block can be obtained. Then, the predictive coding processing is finished (1208).

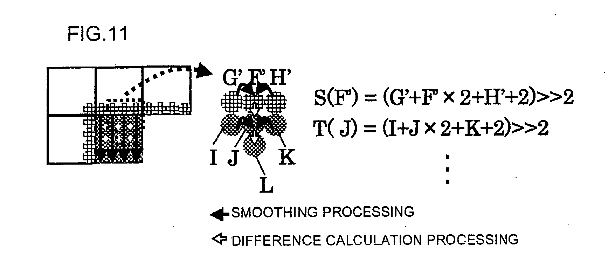

Next, the smoothing processing at steps 1204 and 1205 in FIG. 12 will be described with reference to FIG. 11. FIG. 11 shows one embodiment of smoothing processing on a reference pixel.

The smoothing processing at step 1204 in FIG. 12 is shown as the smoothing processing on a pixel F' in FIG. 11, for example. That is, if it is determined at step 1203 in FIG. 12 that a pixel to be predicted is a pixel on the block boundary (in this example, a pixel J), a decoded image of a pixel at the previous coordinates (the pixel F') and its surrounding pixels is smoothed. In this example, a pixel value S(F') after the smoothing of the pixel F' to be smoothed is calculated as the weighted average of the pixel value of a decoded image of the pixel F' and the pixel value of a decoded image of pixels (G' and H') at both adjacent positions of the pixel F'. Herein, S(X) is one example of a function of a pixel X to calculate the pixel value produced by smoothing the pixel value of a decoded image of a plurality of pixels.

The smoothing processing at step 1205 in FIG. 12 is shown as the smoothing processing on a pixel J in FIG. 11, for example. That is, if it is determined at step 1203 in FIG. 12 that a pixel to be predicted is a pixel on the block boundary (in this example, a pixel L), an original image of a pixel at the previous coordinates (the pixel J) and its surrounding pixels is smoothed. In this example, a pixel value T(J) after the smoothing of the pixel J to be smoothed is calculated as the weighted average of the pixel value of an original image of the pixel J and the pixel value of an original image of pixels (I and K) at both adjacent positions of the pixel J. Herein, T(X) is one example of a function of a pixel X to calculate the pixel value produced by smoothing the pixel value of an original image of a plurality of pixels.

In the two examples of the smoothing processing in the above, one example of the weighted average is used. However, the conventional various smoothing methods can be used for a method of calculating a pixel to be smoothed by using a value of a function using pixel values of a plurality of pixels (pixel values of a decoded image or the original image) positioning around a pixel to be smoothed (that can be adjacent or separate) as variables.

With the image coding device and the image coding method which perform the improved intra-screen predictive coding processing using the smoothing processing described in the above, quantization errors can be further reduced at the decoding, so that an encoded stream can be generated in which a video of higher image quality can be decoded with less amount of coding.

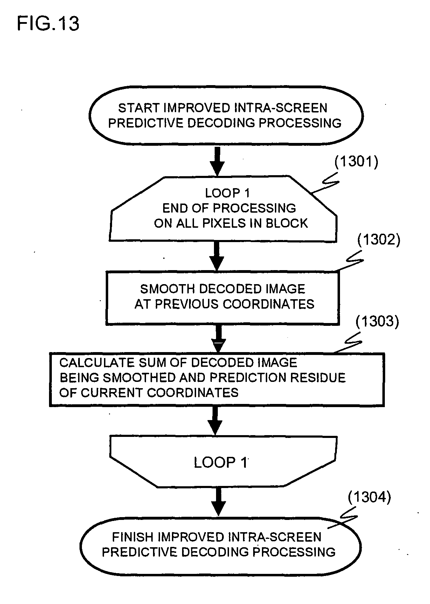

Next, FIG. 13 illustrates a configuration example of the improved intra-screen predictive decoding processing shown in FIG. 8 of using the above smoothing processing. Herein, the following processing is performed on all pixels in a block in the order along a predicting direction (1301). That is, a decoded image at the previous coordinates is smoothed (1302), the sum of the decoded image being smoothed and the prediction residue of the current coordinates is calculated (1303). When the above processing is completed for all the pixels, one block of decoded image can be obtained. Then, the predictive decoding processing is finished (1304). The smoothing processing at step 1302 in FIG. 13 can be, for example, similar processing to the calculation of a pixel value S(F') in the smoothing processing on the pixel F' at step 1204 in FIG. 12.

With the image decoding device and the image decoding method which perform the improved intra-screen predictive decoding processing using the smoothing processing described in the above, quantization errors can be further reduced and a video of higher image quality can be decoded.

Although the embodiment employs the DCT as one example of frequency conversion, any orthogonal transformation used to eliminate inter-pixel correlation can be used such as DST (Discrete Sine Transformation), WT (Wavelet Transformation), DFT (Discrete Fourier Transformation), KLT (Karhunen-Loeve Transformation). Additionally, no particular frequency conversion is performed but the prediction residue itself can be encoded. Further, the variable length coding is not particularly performed.

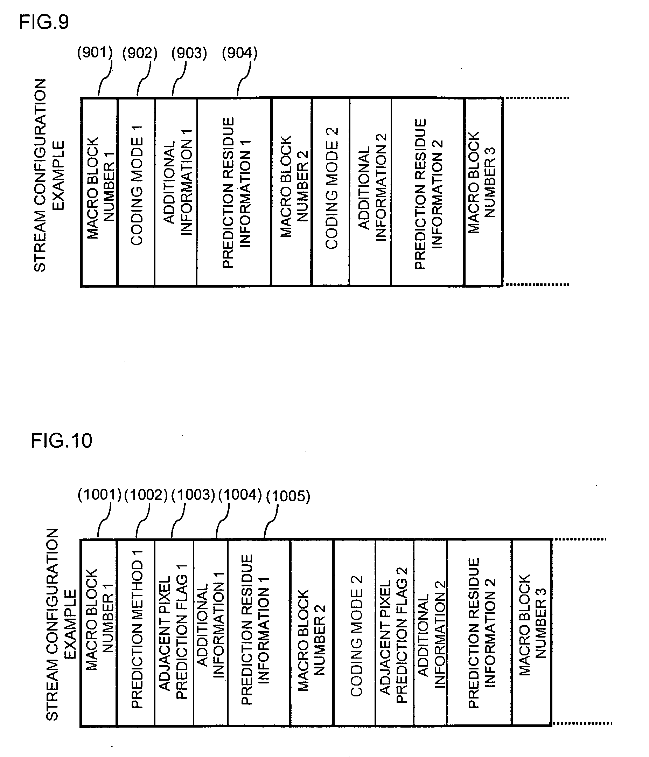

FIG. 9 shows a configuration example of coding parameter parts to be set for each block in encoded streams generated using this embodiment. Herein, similarly to a processing unit in the H.264/AVC, a case will be described in which a coding mode is decided for a fixed-length size of each macro block. A macro block can further split into fine blocks, each of which the predictive coding is performed on. During the coding, a macro block number (901) to specify its coordinates, a coding mode number (902) representing a prediction method and a block size, additional information (903) necessary to perform the prediction such as a motion vector for the inter prediction or a predicting direction for the intra prediction, for example, and prediction residue information (904) are subjected to the variable length coding and stored for each macro block. Particularly, the coding mode number (902) can be assigned as sequential numbers to all prediction means, or represented in different bits for each prediction means.

FIG. 10 shows another configuration example of coding parameter parts to be set for each block. In this example, a macro block number (1001), a prediction method (1002), a flag (1003), which is attached to the method (1002), representing whether or not to perform the prediction using adjacent pixels according to this embodiment, additional information (1004) and prediction residue information (1005) are stored.

Although this embodiment has discussed coding of a moving image, the present invention is also effective to encode a still image. That is, omission of the movement search unit (103) and the inter prediction unit (105) from the block diagram in FIG. 1 corresponds to a block diagram of a coding device specialized for a still image.

## Claims

1. A moving image coding device including an intra prediction unit which performs intra prediction for each block and calculating prediction residue; a frequency converting unit and a quantization unit which perform coding on the prediction residue; and a variable length coding unit which performs coding depending on a probability of symbol occurrence, wherein:
the intra prediction unit comprises intra-screen predictive coding means which performs predictive coding processing on a pixel to be encoded by always referencing adjacent pixels.

2. The moving image coding device according to claim 1, wherein:
the intra prediction unit defines a plurality of predicting directions, and calculates difference between the adjacent pixels in a relevant predicting direction in the predictive coding.

3. The moving image coding device according to claim 1 or 2, wherein:
the intra prediction unit comprises intra-screen predictive coding means which executes different predictive coding processing in addition to the intra-screen predictive coding means which performs predictive coding processing on a pixel to be encoded by always referencing adjacent pixels, and includes a coding mode selection unit which selects, on a block or image basis, an optimal one of results of the coding by a plurality of the intra-screen predictive coding means of the intra prediction unit.

4. A moving image coding method of performing frequency conversion and quantization to perform intra prediction for each block, calculate prediction residue and encode the prediction residue, and of performing variable length coding to perform coding depending on a probability of symbol occurrence, wherein:
the moving image coding method performs intra-screen predictive coding to execute predictive coding processing on a pixel to be encoded by always referencing adjacent pixels in the intra prediction.

5. The moving image coding method according to claim 4, wherein:
a plurality of predicting directions are defined in the intra prediction, and difference between adjacent pixels is calculated in a relevant predicting direction in the predictive coding.

6. The moving image coding method according to claim 4 or 5, wherein:
intra-screen predictive coding to execute different predictive coding processing is performed in addition to the intra-screen predictive coding to execute predictive coding processing on a pixel to be encoded by always referencing adjacent pixels in the intra prediction, and an optimal one of results of the coding by a plurality of intra-screen predictive coding processes in the predictive coding is selected on a block or image basis.

7. A moving image decoding device including: a variable length decoding unit which takes an inverse procedure to variable length coding; an inverse quantization processing unit and an inverse frequency converting unit which decode predictive difference; and an intra prediction unit which performs intra prediction for each block to obtain a decoded image, wherein:
the intra prediction unit comprises intra-screen predictive decoding means which predicts a pixel to be decoded by always referencing adjacent pixels.

8. The moving image decoding device according to claim 7, wherein:
the intra prediction unit defines a plurality of predicting directions, and calculates a sum of a decoded image of adjacent pixels in a relevant predicting direction and prediction residue in predictive decoding.

9. The moving image decoding device according to claim 7 or 8, wherein:
the intra prediction unit comprises intra-screen predictive decoding means which executes different predictive decoding processing in addition to the intra-screen predictive decoding means, and a plurality of the intra-screen predictive decoding means decode data subjected to predictive coding by a different scheme on a block or image basis.

10. A moving image decoding method of performing variable length decoding to take an inverse procedure to variable length coding; performing inverse quantization processing and inverse frequency conversion to decode prediction residue; performing intra prediction for each block; and performing intra prediction to obtain a decoded image, wherein:
intra-screen predictive decoding is performed to predict a pixel to be decoded by always referencing adjacent pixels in the intra prediction.

11. The moving image decoding method according to claim 10, wherein:
a plurality of predicting directions are defined to perform the intra prediction, and prediction residue of a pixel to be decoded in a relevant predicting direction is added to an a decoded image of adjacent pixels in predictive decoding.

12. The moving image decoding method according to claim 10 or 11, wherein:
in addition to intra-screen predictive decoding to predict the pixel to be decoded by always referencing adjacent pixels, intra-screen predictive decoding is possible to execute predictive decoding processing in a different method, and data subjected to predictive coding in a different scheme on a block or image basis is decoded.

13. The moving image coding device according to claim 1, wherein: the intra-screen predictive coding means references a value of a smoothing function to use pixel values of adjacent pixels of the pixel to be encoded or pixel values of any plurality of decoded images or a pixel value of an original image among a plurality of pixels positioning around the adjacent pixels as variables.

14. The moving image coding method according to claim 4, wherein: a value of a smoothing function is referenced to use pixel values of adjacent pixels of the pixel to be encoded or pixel values of any plurality of decoded images among a plurality of pixels positioning around the adjacent pixel or a pixel value of an original image as variables in the intra prediction.

15. The moving image decoding device according to claim 7, wherein: the intra-screen predictive decoding means references a value of a smoothing function to use pixel values of adjacent pixels of the pixel to be decoded or pixel values of any plurality of decoded images among a plurality of pixels positioning around the adjacent pixels as variables.

16. The moving image decoding method according to claim 10, wherein: a value of a smoothing function is referenced to use pixel values of adjacent pixels of the pixel to be decoded or pixel values of any plurality of decoded images among a plurality of pixels positioning around the adjacent pixels as variables in the intra prediction.
